# EUROPEAN PATENT APPLICATION

(11) **EP 1 028 560 A2**
(43) Date of publication of application: **16.08.2000**
(21) Application number: 99117872.4
(22) Date of filing: 10.09.1999
(51) Int. Cl.: H04L 12/28, H04Q 7/38

(54) **Virtual network access**

(30) Priority: 10.02.1999 US 248470
(71) Applicant: Hewlett-Packard Company, Palo Alto, CA 94304 (US)
(72) Inventor: Cox, Darrell L., Boise, ID 83713 (US); Bhatti, Shahzad H., Boise, ID 83713 (US)
(74) Representative: Schoppe, Fritz, Dipl.-Ing.

(57) **Abstract**

A system (2) and method provide access to a network (8). The network (8) is any type of network (8), such as an intranet or an internet. A portable device (4), such as a laptop computer or a hand held computer, communicates with a network device (6). The network device (6) communicates with the network (8). The network device (6) includes a conduit (20) for providing communication between the portable device (4) and the network (8). The conduit (20) includes a combination of hardware and software that together allow access of the network (8) by the portable device (4).

## Description

### FIELD OF THE INVENTION

This invention relates in general to network technology and, more particularly, to a system and method for accessing a network through a printer.

### BACKGROUND OF THE INVENTION

Traditionally, devices such as printers and scanners required connection to a computer in order to operate on a network. Recently, network devices have been developed that include the necessary hardware and software to operate on a network without passing through a computer first. However, much of the time the network capabilities of these network devices are underused.

Additionally, some of these network devices now also include infrared (IR) ports. These IR ports provide a means for communicating with a portable computer without the need for a physical connection between the network device and the portable device. However, these IR ports are also underused, as their utility has been limited to accessing one network device at a time.

### SUMMARY OF THE INVENTION

According to principles of the present invention, a system and method access a network. A portable device, such as a laptop computer or a hand held computer, communicates with a network device. The network device communicates with the network. The network device includes a conduit for providing communication between the portable device and the network. The conduit includes a combination of hardware and software that together allow access of the network by the portable device.

Other objects, advantages, and capabilities of the present invention will become more apparent as the description proceeds.

### DESCRIPTION OF THE DRAWINGS

Figure 1 is a block diagram illustrating one embodiment of the system of the present invention.

Figure 2 illustrates several embodiments of the conduit means in Figure 1.

### DETAILED DESCRIPTION OF THE INVENTION

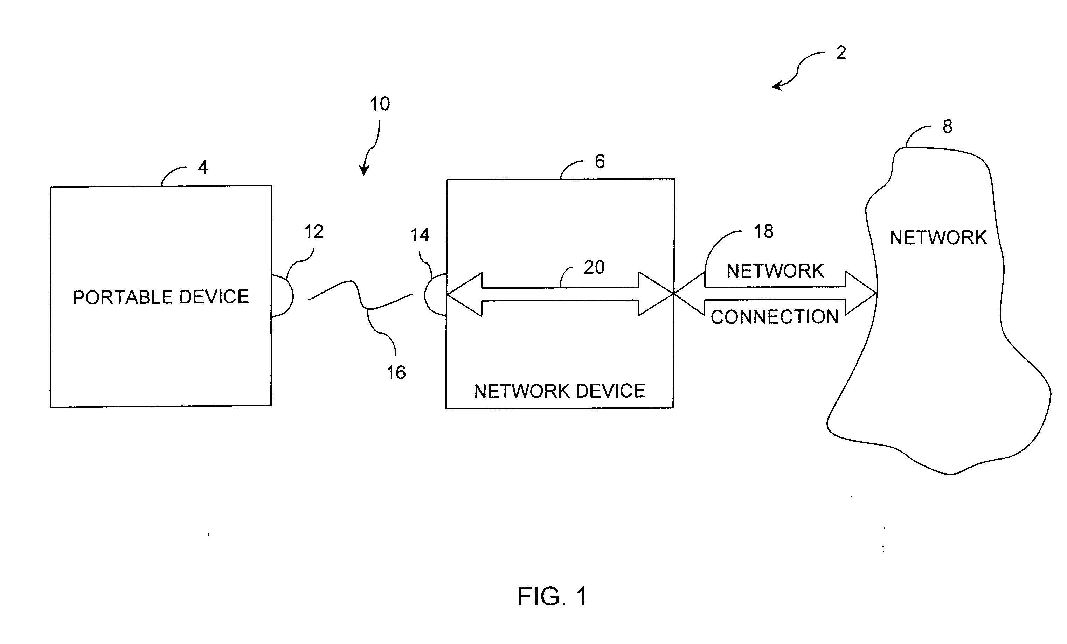

Figure 1 shows a virtual network access system 2 of the present invention. A portable device 4 communicates with network device 6. Portable device 4 is any device, such as a handheld computer or a laptop computer, which is portable in nature and able to communicate with other devices.

Portable device 4 communicates with network device 6 using a linking means 10. Linking means 10 is any system or method for providing communication between portable device 4 and network device 6. Linking means 10 is a wired or wireless linking means. For example, one embodiment of a wireless linking means 10 is a radio frequency (RF) system. Another embodiment of a wireless linking means 10 is an infrared (IR) system. The IR system includes IR ports 12 and 14 located on portable device 4 and network device 6, respectively. IR port 12 of portable device 4 sends and receives an IR signal 16 to and from IR port 14 of network device 6. IR port 14 of network device 6 also sends and receives IR signal 16 to and from IR port 12 of portable device 4. The exchange of IR signal 16 between portable device 4 and network device 6 provides communication between portable device 4 and network device 6.

Network device 6 is any device; such as a printer, scanner, or computer; which is able to communicate with a network 8 and has a primary function other than merely providing communication between portable device 4 and network 8. Network 8 is any type of network. For example, network 8 is an intranet, internet, dial-up network, local area network, or wide area network. Network device 6 communicates with network 8 over a network connection 18. Network connection 18 is any means of communication between network device 6 and network 8.

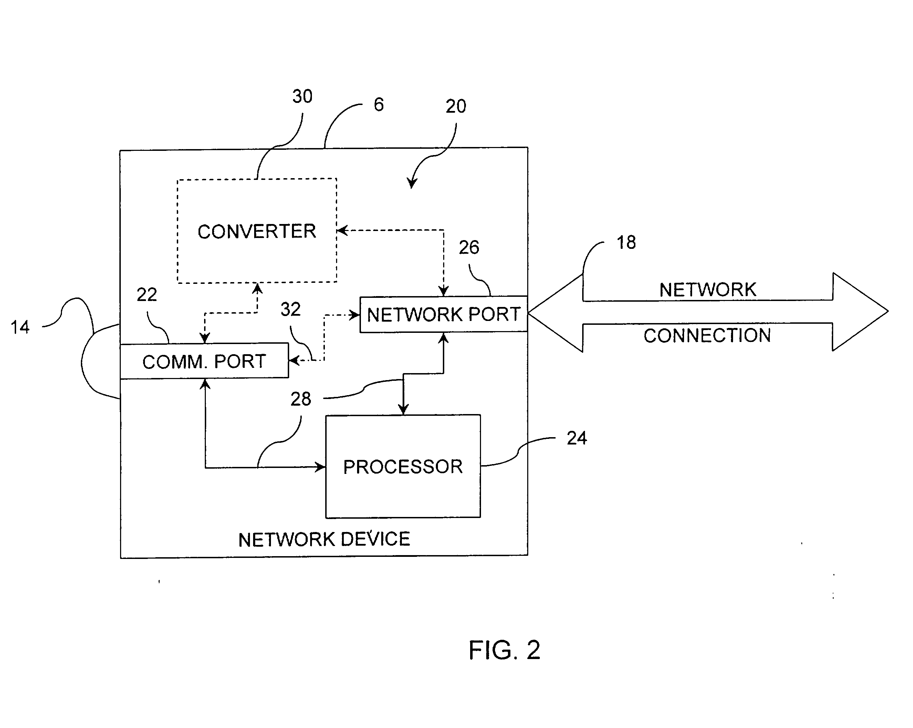

Within network device 6 is a conduit means 20 for providing for providing communication between linking means 10 and network connection 18. Figure 2 illustrates several embodiments of conduit means 20.

Each embodiment of conduit means 20 receives signals from portable device 4 and passes them through to network 8. Although network device 6 may communicate in any method with portable device 4, for clarity, only those methods that use a communication port will be illustrated. Similarly, although network device 6 may communicate in any method with network 8, for clarity, only those methods that use a network port will be illustrated.

In one embodiment, conduit means 20 includes a communication port 22, a processor 24, and a network port 26. Data or information (data, for simplicity) being sent to network 8 is received by communication port 22. The data is then sent to processor 24. From processor 24, the data is sent to network port 26. From network port 26, the data is provided on network connection 18 to network 8.

Data being communicated from network 8 to portable device 4 returns in the opposite direction. The data travels over network connection 18 to network port 26, then to processor 24, then to communication port 22, and finally to portable device 4.

The advantage of this embodiment of conduit link 20 is that all the hardware is already included on most network devices. A system bus 28 provides the communication between processor 24 and communication port 22 and network port 26.

Another embodiment of conduit link 20 also includes communication port 22 and network port 26. However, instead of passing through a processor 24, the data passes through a converter 30. Converter 30 provides any necessary conversion to allow data to pass between communication port 22 and network port 26. The advantage of this embodiment to conduit link 20 is that no processor is necessary in network device 6 to provide the communication between portable device 4 and network 8.

Still another embodiment of conduit link 20 again includes communication port 22 and network port 26. However, instead of passing through a processor 24 or a converter 30, the data passes directly 32 between communication port 22 and network port 26. This embodiment 32 of conduit link 20 requires that the data format of communication port 22 and network port 26 be compatible and require no conversion.

The system and method of the present invention are particularly advantageous in network devices that conventionally have not been useful for providing communication to a network. For example, printers and scanners have typically only used one direction of a network connection. Printers only receive data to be printed and scanners only send scanned images to be saved. Neither device has used the full capabilities of a network connection. The present invention allows a user to more fully utilize the network connection of these types of devices.

In an embodiment of the present invention where network device 6 is a printer, the present invention includes added capabilities. The printer 6 may be used to print documents stored on network 8. Portable device 4 may retrieve or select a document from network 8 by communicating through printer 6. The document is then printed on printer 6.

It should be understood that the foregoing description is only illustrative of the present invention. Various alternatives and modifications can be devised by those skilled in the art without departing from the invention. Accordingly, the present invention is intended to embrace all such alternatives, modifications and variances that fall within the scope of the appended claims.

## Claims

1. A system (2) for accessing a network (8), the system (2) comprising:
(a) a portable device (4);
(b) a network device (6) having means (18) for communicating with the network (8), the network device (6) having a primary function other than providing communication between the portable device (4) and the network (8);
(c) linking means (10) for providing communication between the portable device (4) and the network device (6); and,
wherein the portable device (4) communicates with the network (8) through the linking means (10) and the means (18) for communicating with the network (8).

2. The system (2) of claim 1 wherein the network device (6) further includes conduit means (20) for providing communication between the linking means (10) and the means (18) for communicating with the network (8) and wherein the portable device (4) communicates with the network (8) through the linking means (10), the conduit means (20), and the means (18) for communicating with the network (8).

3. The system (2) of claim 2 wherein the conduit means (20) includes a processor (24).

4. The system (2) of claim 1 wherein the linking means (10) includes:
(a) the portable device (4) including:
(i) a first communication port (12); and
(ii) means for communicating through the first communication port (12); and,
(b) the network device (6) including:
(i) a second communication port (14); and
(ii) means for communicating through the second communication port (14).

5. The system (2) of claim 4 wherein the first communication port (12) is an infrared port and the second communication port (14) is an infrared port.

6. A method for accessing a network (8), the method comprising:
(a) a linking means (10) providing communication between a portable device (4) and a network device (6), the network device (6) having a primary function other than providing communication between the portable device (4) and the network (8);
(b) a communication means of the network device (6) communicating with the network (8); and,
(c) the portable device (4) communicating with the network (8) through the linking means (10) and the communication means.

7. The method of claim 6 further including:
(a) a conduit means (20) of the network device (6) providing communication between the linking means (10) and the network (8); and,
(b) the portable device (4) communicating with the network (8) through the linking means (10), the conduit means (20), and the communication means.

8. The method of claim 7 wherein the conduit means (20) includes a processor (24).

9. The method of claim 6 wherein providing communication between the portable device (4) and the network device (6) includes:
(a) communicating through a first communication port (12) included in the portable device (4); and,
(b) communicating through a second communication port (14) included in the network device (6).

10. The method of claim 9 wherein the first communication port (12) is an infrared port and the second communication port (14) is an infrared port.
